# EUROPEAN PATENT APPLICATION

(11) **EP 2 654 005 A1**
(43) Date of publication of application: **23.10.2013**
(21) Application number: 13156483.3
(22) Date of filing: 22.02.2013
(51) Int. Cl.: G06Q 10/10

(54) **Dual time zone view and weather application in electronic device**

(30) Priority: 24.02.2012 US 201261602824 P; 29.01.2013 US 201313752976; 24.02.2012 US 201261602804 P
(71) Applicant: HTC Corporation, Taoyuan County 330 (TW)
(72) Inventor: Hsu, Lu-Cheng, Taoyuan 330 Taoyuan City (TW)
(74) Representative: Konkonen, Tomi-Matti Juhani

(57) **Abstract**

A computer-implemented method for displaying a dual time zone view on a portable electronic device with a touch screen is provided. The method has the following steps of: executing a calendar application to display a calendar view including multiple calendar items scheduled in a first time zone and a second time zone; and displaying a time zone bar including a first column and a second column, wherein the time of the first time zone and the second time zone is displayed on the first column and the second column, respectively.

## Description

### Cross reference to related Applications

This application claims the benefit of U.S. Provisional Application No. 61/602804, filed Feb. 24, 2012, and U.S. Provisional Application No. 61/602824, filed Feb. 24, 2012, the entirety of which are incorporated by reference herein.

### BACKGROUND

### Field

The embodiment of the present invention relates to portable electronic devices, and in particular, relates to portable electronic devices that display a work space including two work sub-spaces for illustrating a dual time zones view, and alternatively, portable electronic devices that display another work space illustrating a weather news interface.

### Description of the Related Art

With advances in different technologies, portable devices, such as a smart phone, or a tablet PC, have become more and more popular. For example, users may plan their schedules on a portable device, and the schedules may be in different time zones when the user is traveling around the world. However, for a conventional portable device, it is inconvenient to check the schedules in different time zones since conventional time applications do not integrate the information of locations in different time zones within the schedules.

### Brief Summary

A detailed description is given in the following embodiments with reference to the accompanying drawings.

In an exemplary embodiment, a computer-implemented method for displaying a dual time zone view on a portable electronic device with a touch screen is provided. The method comprises the following steps of: executing a calendar application to display a calendar view including multiple calendar items scheduled in a first time zone and a second time zone; and displaying a time zone bar including a first column and a second column, wherein the time of the first time zone and the second time zone is displayed on the first column and the second column, respectively.

In another exemplary embodiment, a portable electronic device is provided. The portable electronic device comprises: a touch screen; and a processor configured to execute a calendar application to display a calendar bar including multiple calendar items scheduled in a first time zone and a second time zone, wherein the processor further displays a time zone bar including a first column and a second column, and the time of the first time zone and the second time zone is displayed on the first column and the second column, respectively.

In yet another exemplary embodiment, a computer-implemented method for displaying a user interface of weather information on a portable electronic device with a touch screen is provided. The method comprises the following steps of: executing a weather application to display a user interface on the touch screen, wherein the user interface comprises a weather application bar, a weather news view, and a news tab; retrieving multiple weather news reports from the internet in response to the news tabs being pressed through the touch screen; and displaying the multiple weather news reports on a respective weather news bar of the weather news view.

In yet another exemplary embodiment, a portable electronic device is provided. The portable electronic device comprises: a touch screen; and a processor configured to execute a weather application to display a user interface on the touch screen, wherein the user interface comprises a weather application bar, a weather news view, and a news tab, and the processor further retrieves multiple weather news reports from the internet in response to the news tabs being pressed through the touch screen and displays the multiple weather news reports on a respective weather news bar of the weather news view.

### Brief description of the drawings

The present invention can be more fully understood by reading the subsequent detailed description and examples with references made to the accompanying drawings, wherein:

FIG. 1 is a schematic diagram illustrating a portable electronic device 100 according to an embodiment of the invention;

FIG. 2 is a diagram illustrating an exemplary user interface of "Month View" of a calendar application according to an embodiment of the invention;

FIG. 3 is a diagram illustrating an exemplary user interface of a calendar application executed on the portable electronic device 100 according to an embodiment of the invention;

FIG. 4 is a diagram illustrating yet another exemplary user interface comprising a pop-up dialogue in a calendar application executed on the portable electronic device 100 according to an embodiment of the invention;

FIG. 5 is a flow chart illustrating a method for displaying a dual time zone view on the portable electronic device 100 according to an embodiment of the invention;

FIG. 6 is a diagram illustrating an exemplary user interface of a weather application executed on the portable electronic device 100 according to an embodiment of the invention; and

FIG. 7 is a flow chart illustrating a method for displaying a user interface of weather information on the portable electronic device 100 according to an embodiment of the invention.

### Detailed Description

The following description is of the best-contemplated mode of carrying out the invention. This description is made for the purpose of illustrating the general principles of the invention and should not be taken in a limiting sense. The scope of the invention is best determined by reference to the appended claims.

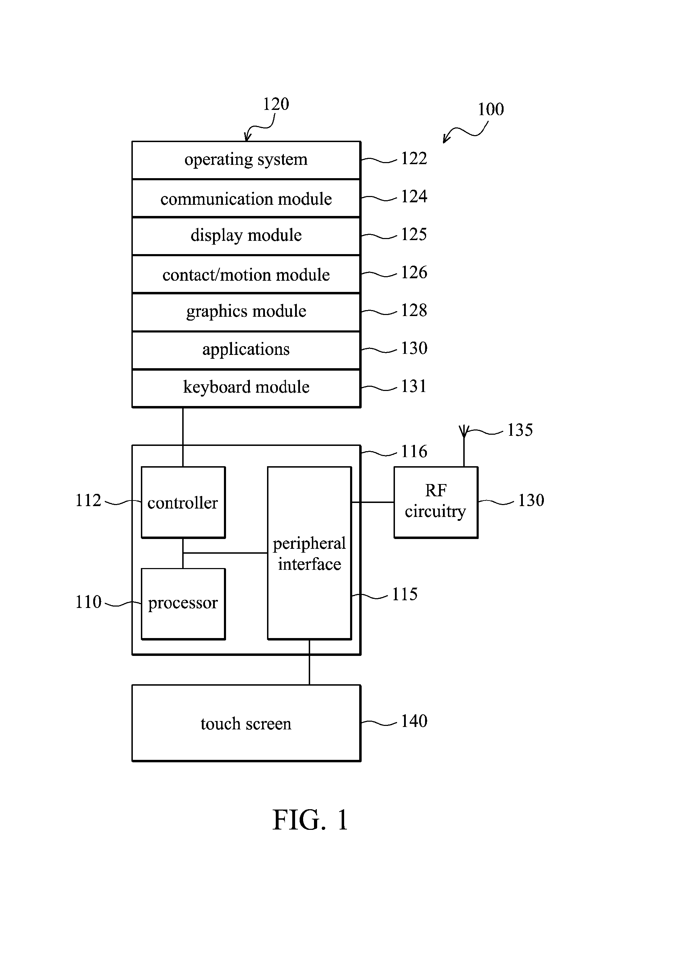

FIG. 1 is a schematic diagram illustrating a portable electronic device 100 according to an embodiment of the invention. The portable electronic device 100 may comprise a processor 110, a memory unit 120, a RF circuitry 130 and a touch screen 140. In an exemplary embodiment, the portable electronic device 100 may be a cellular telephone, a smart phone or a tablet PC. The processor 110 may be one or more data processors, image processors and/or central processors, which are capable of executing one or more types of computer readable medium stored in the memory unit 120. The processor 110 is coupled to the RF circuitry 130 and the touch screen 140 through a peripheral interface 115, as illustrated in FIG. 1.

The RF circuitry 130 may be coupled to one or more antennas 135 and may allow communication with one or more additional devices, computers and/or servers using a wireless network. The portable electronic device 100 may support various communications protocols, such as code division multiple access (CDMA), Global System for Mobile Communications (GSM), Enhanced Data GSM Environment (EDGE), High-Speed Downlink Packet Access (HSDPA), Wi-Fi (such as IEEE 802.11a/b/g/n), Bluetooth, Wi-MAX, a protocol for email, instant messaging (IM), and/or a short message service (SMS), but the invention is not limited thereto.

The touch screen 140 may detect contact and any movement or break thereof using any of a plurality of touch sensitivity technologies now known or to be later developed, including, but not limited to capacitive, resistive, infrared, and surface acoustic wave technologies, as well as other proximity sensor arrays or other elements for determining one or more points of contact with the touch screen 140. However, the touch screen 140 may also display visual output from the portable device 100. In some embodiments, the portable electronic device 100 may include circuitry (not shown in FIG. 1) for supporting a location determining capability, such as that provided by the Global Positioning System (GPS).

The memory controller 112 may be coupled to the memory unit 120, which may include one or more types of computer readable medium. The memory unit 120 may include high-speed random access memory (e.g. SRAM or DRAM) and/or nonvolatile memory, such as one or more magnetic disk storage devices, one or more optical storage devices, and/or flash memory. The memory unit 120 may store an operating system 122, such as LINUX, UNIX, OS X, WINDOWS, or an embedded operating system such as VxWorks. The operating system 122 may include procedures for handling basic system services and for performing hardware dependent tasks. The memory unit 120 may also store communication procedures in a communication module 124. The communication procedures may be used for communicating with one or more additional devices, one or more computers and/or one or more servers. The memory unit 120 may include a display module 125, a contact/motion module 126 to determine one or more points of contact and/or their movement, and a graphics module 128. The graphics module 128 may support widgets, that is, modules or applications with embedded graphics. The widgets may be implemented using JavaScript, HTML, Adobe Flash, or other suitable computer program languages and technologies.

The memory unit 120 may also include one or more applications 130. For example, applications stored in the memory unit 120 may include telephone applications, email applications, text messaging or instant messaging applications, memo pad applications, address books or contact lists, calendars, picture taking and management applications, and music playing and management applications. The applications 130 may include a web browser (not shown in FIG. 1) for rendering pages written in the Hypertext Markup Language (HTML), Wireless Markup Language (WML), or other languages suitable for composing web pages or other online content. The memory unit 120 may further include a keyboard module (or a set of instructions) 131. The keyboard module 131 operates one or more soft keyboards.

It should be noted that each of the above identified modules and applications correspond to a set of instructions for performing one or more functions described above. These modules (i.e., sets of instructions) need not be implemented as separate software programs, procedures or modules. The various modules and sub-modules may be rearranged and/or combined. Various functions of the portable electronic device 100 may be implemented in hardware and/or in software, including in one or more signal processing and/or application specific integrated circuits.

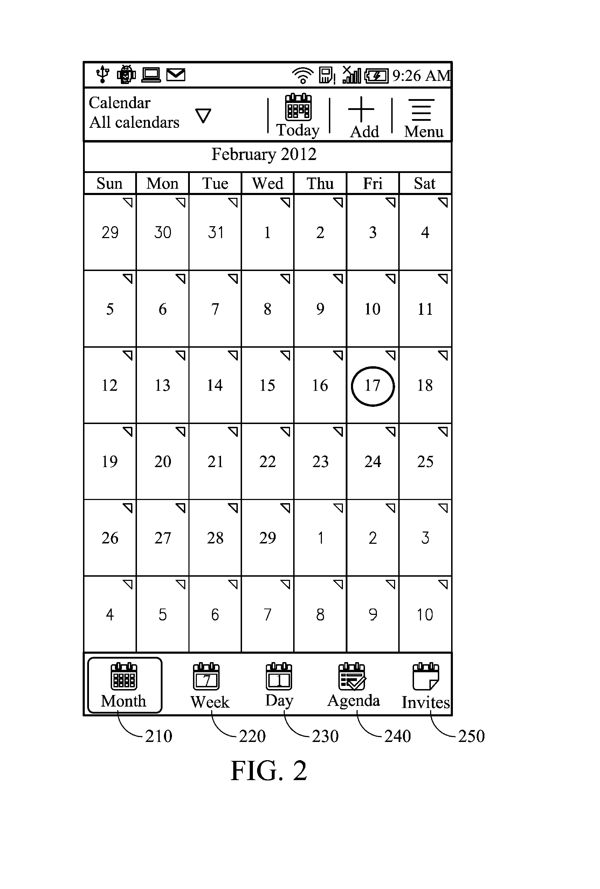

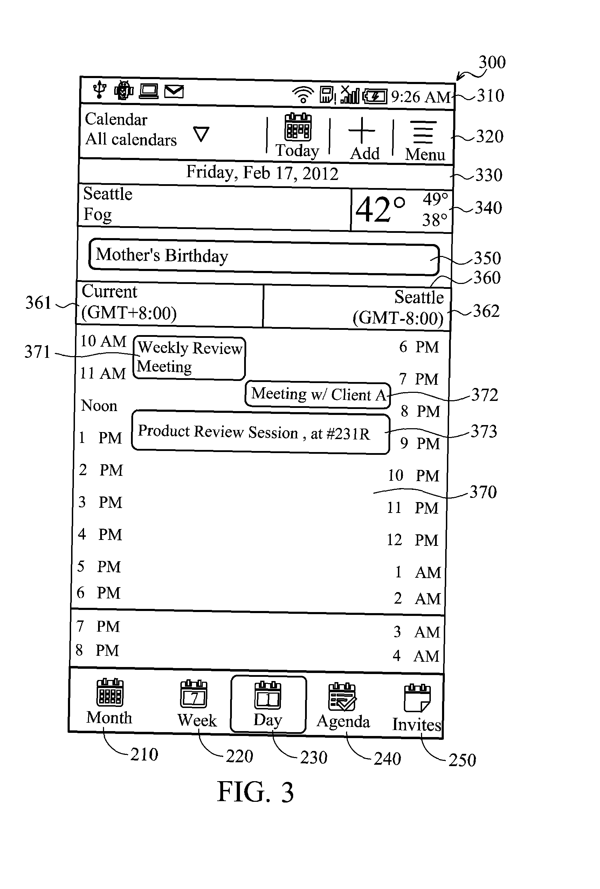

A user interface and user interface control for displaying calendar data in a calendar application implemented on the portable electronic device 100 is provided. FIG. 2 is a diagram illustrating an exemplary user interface of "Month View" of a calendar application according to an embodiment of the invention. The calendar application (e.g. one of the applications 130 stored in the memory unit 120) is executed on the portable electronic device 10 (e.g. with Android operating system). There are several toggle view spaces (e.g. Tab 210∼230) and navigation options (e.g. Tab 240∼250) on the user interface of the calendar application, wherein Tab 210 denotes a month view of the calendar; Tab 220 denotes a week view of the calendar; Tab 230 denotes a day view of the calendar; Tab 240 denotes today's agenda; and Tab 250 denotes the invitations from other users. In the month view of the calendar, the user may press a certain day of the month on the calendar, thereby opening the agenda of the certain day. In addition, if the user presses on TAB 230 of the calendar application, a today's agenda will be displayed on the portable electronic device 100, as illustrated in FIG. 3.

If the user goes to the Day View from the Month View's grid, the screen will go back to the Month View if the hardware/software BACK key is pressed. Specifically, if the user is viewing the sequence Month View → Day View → Event Detail View, the behavior of pressing the hardware/software BACK key may go through Event Detail View → Day View → Month View. Generally, if the user goes to Day View by pressing Tab 130, the behavior of pressing the hardware/software back may go back to the previous screen.

FIG. 3 is a diagram illustrating an exemplary user interface of a calendar application according to an embodiment of the invention. The user interface 300 may comprise a status bar 310, an application bar 320, a date bar 330, a weather bar 340, an agenda bar 350, a time zone bar 360, and a calendar item view space 370. The status bar 310 may provide information about the portable electronic device, such as the battery life, the AC adapter usage, the signal strength, the connection speed, available memory, the connection type, and the like. The application bar 320 may provide information about the calendar application, such as the menu(e.g. "Options", "Add New Event", "Shared to Other Users" or "Search", etc.), calendar selections(e.g. select the calendar of a specific date), and some related functions. The date bar 330 may provide information about the current date, such as day, month, and year. The default current date displayed on the date bar 330 may be based on the current location of the user. Alternatively, the user may press on the date bar 330 to alternate the time zone settings of the date bar 330 to be based on the time zone of the destination (e.g. a city) set at column 362, and thus the current date of the time zone of the destination will be displayed on the date bar 330. The weather bar 340 may provide information about the weather conditions and/or the ambient temperature of a predetermined location (e.g. a city). The agenda bar 350 may provide information about today's agenda or the user's availability or when calendar items exist over a 12 hour block of time.

Note that the detailed view of each calendar item (e.g. calendar item 371∼373) is illustrated in the calendar item view space 370. The time zone bar 360 may comprise at least two time zone columns (e.g. columns 361 and 362), which can be regarded as a "dual time zone view". In the embodiment, the time zone bar 360 is displayed in the form of a bar, but the invention is not limited thereto. The user may alternate the time zone settings in columns 361 and 362 separately. For example, referring to FIG. 3, the time zone in column 361 is GMT +8:00 (e.g. Taipei City), and the time zone in column 362 is GMT -8:00 (e.g. Seattle). That is, the current time zone for the user may be set at column 361, and the time zone for the destination may be set at column 362. The calendar application may also be set to detect the location of the user to alternate between the time zone in column 361 and/or column 362 automatically or manually. Specifically, the time zone settings at columns 361 and 362 may be based on the city name at where the user is located. Specifically, the time zone of the column 361 is based on a first city name at where the user is currently located, and the time zone of the column 362 is based on a second city name where the user is schedule to travel. The user may tap on the column 361 or column 362 to alternate the time zone settings in columns 361 and 362.

Referring to the calendar item view space 370 in FIG. 3, there may be several calendar items (i.e. schedule of events) illustrated in the calendar item view space 370 based on the time zone settings in columns 361 and 362. The calendar item view space 370 may record multiple events within a 12 hour block of time (not limited). For example, the user may travel around to different cities in the world. The user may edit the calendar item 371 to follow the time zone settings of column 361 (e.g. AM 10:00∼AM 11:00 based on the current time zone GMT 8:00), as well as edit the calendar item 372 to follow the time zone settings of column 362 (e.g. PM 7:00∼PM 8:00 based on the destination time zone GMT -8:00). In addition, when there is a joint session (e.g. event or meeting) between these two time zones in columns 361 and 362, the calendar item 373 for the joint session may be labeled together in a row (e.g. AM 12:00∼PM 1:00 on time zone GMT 8:00, or PM 8:00∼9:00 on time zone GMT -8:00), which indicates that the joint session will be held at these two places, simultaneously. The user may scroll down or navigate to a previous or next page to see any other calendar items that may exist during or outside of that same 12 hour block of time. Therefore, the user may get a better overall sense of a day's outlook quickly at-a-glance while retaining the ability to see more detailed information regarding at least a subset of calendar items that are presently onscreen.

In another embodiment, the user may press the hardware/software MENU key of the portable electronic device 100 to select one of the following functions of the calendar application, such as "Refresh", "Go to (launch date picker)", "Search", "Edit Tabs (to arrange tabs screen)", "Settings", and "Help". That is, the user may update the information on the calendar item view space 370 freely.

In yet another embodiment, the user may press on one of the calendar items in the calendar item view space 370 for a long time to launch the menu of the selected calendar item. For example, the menu of the selected calendar item may comprise the following functions of "View Event", "Edit", "Delete", and "Forward". The function "View Event" may indicate that the user can view the details of the event. The function "Edit" may indicate that the user can edit the calendar item if the calendar item is editable. The function "Delete" may indicate that the user can delete the calendar item if the calendar item is editable. Further, the calendar application may pop-up a message of "This event will be deleted" with "OK" and "Cancel" buttons for further confirmation by the user. The function "Forward" may indicate that the calendar item can be forward to other users through various interfaces or protocols, such as Bluetooth, Email, MMS, and the like. By contrast, the user may also press on the blank area on the calendar item view space 370 to create a new calendar item (event). It should be noted that the user may also select the time zone settings while creating a new calendar item or modifying the selected calendar item.

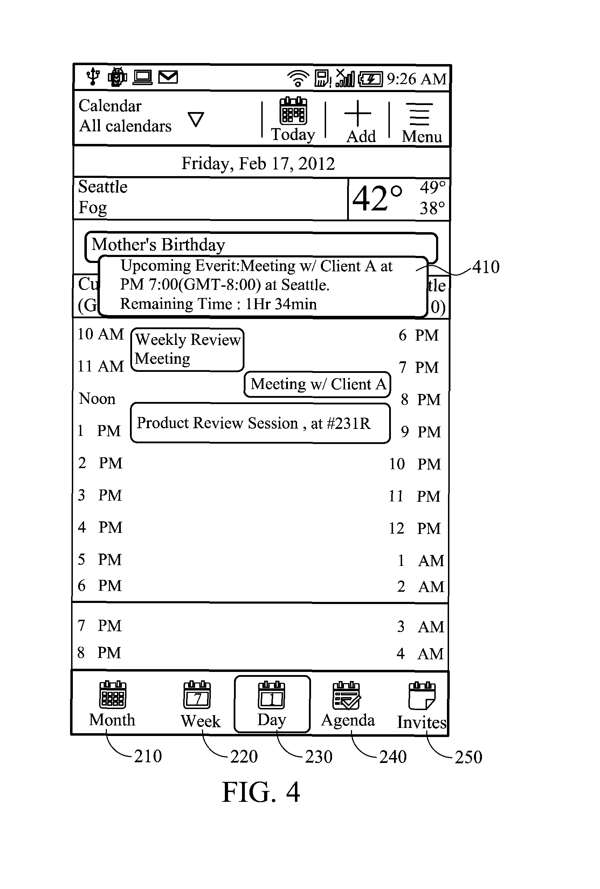

FIG. 4 is a diagram illustrating yet another exemplary user interface comprising a pop-up dialogue in a calendar application executed on the portable electronic device 100 according to an embodiment of the invention. As illustrated in FIG. 4, when the user starts up the calendar application, a pop-up dialogue 410 will be displayed on the screen of the portable electronic device. The pop-up dialogue 410 may comprise information about the nearest event time (including time and the time zone settings) and the remaining time to the nearest event. Specifically, the calendar application may analyze all the calendar items recorded in the calendar item view space 370 (as shown in FIG. 3) with different time zone settings, and display a pop-up dialogue 410 with the aforementioned information. Since the user may travel around the world. It should be noted that the nearest event time displayed on the pop-up dialogue may also comprise information of the time and the time zone of the nearest event. The user may also alternate between the time zone settings of the pop-up dialogue 410 so that the information displayed on the pop-up dialogue 410 may be based on the current time zone or on the time zone of the destination. Further, the nearest event can be regarded as an upcoming event, and the corresponding calendar item in the calendar item view space 370 may be emphasized (e.g. highlighted, shaded, or filled with different colors (e.g. green color or red color)) in response to the remaining time of the upcoming event, so that the user may immediately recognize and acknowledge particular details about the calendar item of the upcoming event.

In addition, the user may further edit the content of the calendar item in the pop-up dialogue 410 by pressing the pop-up dialogue on the screen. For example, there might be some conflicts between various events held simultaneously in two different time zones. Given that the calendar item denotes a meeting, the user may probably want to cancel the meeting, change the meeting time, or send notifications to other users. The user may edit the content of the calendar item and forward it to all of the participants in the meeting through various interfaces or protocols, such as Bluetooth, Email, MMS, and the like. All the participants in the meeting may receive a notification message about the changes to the meeting event.

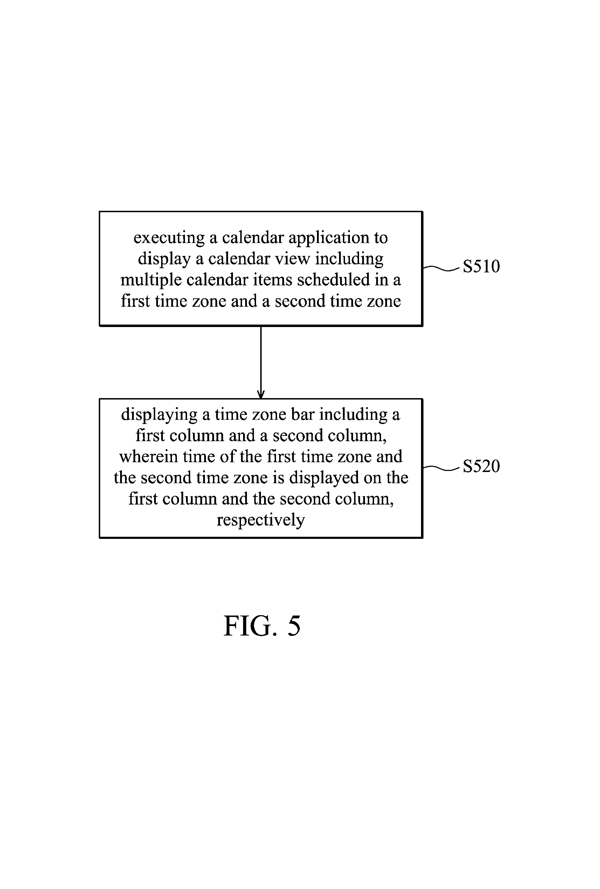

FIG. 5 is a flow chart illustrating a method for displaying a dual time zone view on the portable electronic device 100 according to an embodiment of the invention. Referring to both FIG. 1 and FIG. 5, in step S510, the processor 110 executes a calendar application to display a calendar view 370 including multiple calendar items (e.g. calendar items 371∼373) scheduled in a first time zone and a second time zone. In step S520, the processor 110 displays a time zone bar 360 including a first column 361 and a second column 362, and the time of the first time zone and the second time zone is displayed on the first column 361 and the second column 362, respectively. It should be noted that in some embodiments, the touch screen 140 of the portable electronic device 100 can be substituted with a general display screen. That is, the user interfaces and functions described in FIGs. 2-5 can be alternatively implemented in a portable electronic device without a touch screen.

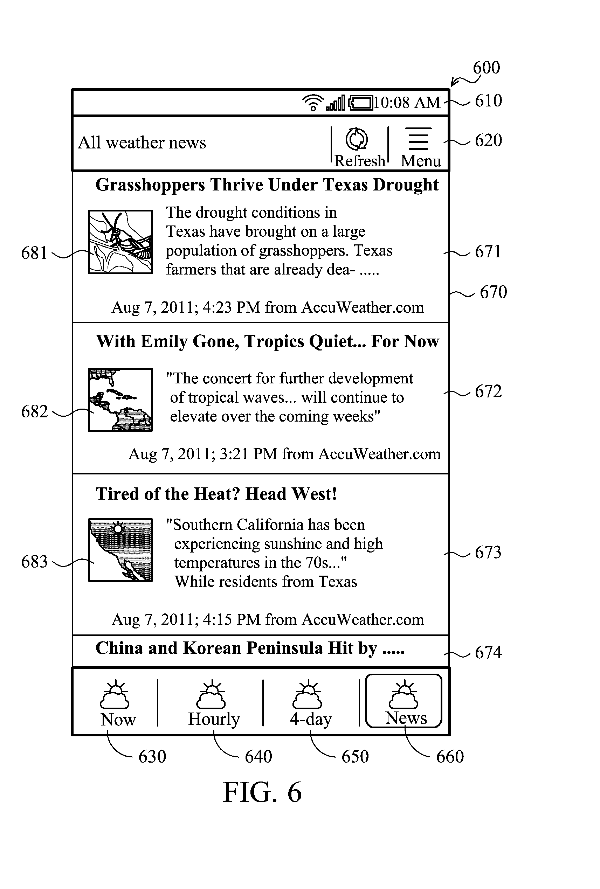

A user interface and user interface control of a weather application executed on the portable electronic device 100 is further provided in the invention. FIG. 6 is a diagram illustrating an exemplary user interface of a weather application executed on the portable electronic device 100 according to an embodiment of the invention. When the portable electronic device executes a weather application in the application, a user interface 600 will be shown on the touch screen 140. The user interface 600 may comprise a status bar 610, a weather application bar 620, several toggle view spaces (e.g. Tabs 630∼660), and a weather news view 670. The status bar 610 may provide information about the portable electronic device 100, such as the battery life, the AC adapter usage, the signal strength, the connection speed, available memory, the connection type, and the like. The weather application bar 620 may provide information about the weather application, such as the menu, region selections, refresh, and some related functions. The user may select one of the Tabs 630-650 to obtain the weather conditions and the ambient temperature of the current location or a predetermined location in different time frames. For example, the user may press Tab 630 to retrieve information about the weather condition and the current temperature of the current location (e.g. a city) from the internet (e.g. a weather website). The user may press Tab 640 to retrieve information about the weather condition for every hour in a day. The user may further press Tab 650 to retrieve information about the weather condition in a four-day period of time (e.g. including today and the next three days). It should be noted that the retrieved information from the internet may be displayed on the weather application bar 620 or the weather news view 670, so that the user may quickly obtain the desired weather information.

In addition, the user may press Tab 660 to retrieve weather-related news reports from the internet (e.g. from AccuWeather.com). The retrieved weather news reports (or weather news items) are further displayed in weather news bars 670, 671, 672, and 673, respectively. It should be noted that the amount of retrieved weather-related news reports are not limited to four, and the user may set the amount of weather-related news reports freely. In another embodiment, the user may also set the time range of the retrieved weather-related news reports (e.g. from 2011/8/1 to 2011/12/31) by pressing the "menu" button on the weather application bar 620. The user may tap one of the weather news bars to open the browser and link to the website (e.g. Accuweather.com) for more detail. It should be noted that each weather news bar may comprise a thumbnail (e.g. thumbnail view 681∼683), a headline, data and time. The data may be a brief description about the weather news report. The time in the weather news bars may indicate the time when the weather news item is created on the corresponding website.

In yet another embodiment, the user may also set the weather application to retrieve weather-related news reports within a specific region (e.g. Asia, Europe, or America). Further, the user may designate a specific city name, so that the weather application may only retrieve weather-related news reports for around the specific city.

Assume that the user is viewing the weather-related news reports on the screen of the portable electronic device. Generally, the retrieved weather-related news reports are displayed separately in different weather news bars, and the weather application may periodically retrieve the latest weather-related news reports from the internet and update the information in each weather news bar. In addition, the user may update the information in each weather news bar manually by pressing the "Refresh" button on the weather application bar 620, so that the weather application may retrieve the latest weather-related news reports from the internet upon a user's request.

Referring to FIG. 3, in another embodiment, the weather bar 340 in the calendar application can be linked to the weather application. Specifically, the user may press on the weather bar 340 in the calendar application, so that the weather application can be executed and the user interface 300 can be displayed on the touch screen 140 of the portable electronic device. Specifically, when the user activates the weather application by pressing on the weather bar 340 of the calendar application, the retrieved weather-related news reports may be global, around a specific region, or around the specific city illustrated in the weather bar 340, depending on a user's location settings. It should be noted that the location displayed on the weather bar 340 may be related to one of the two time zones corresponding to two cities in the time zone bar. Alternatively, the user may also set the location displayed on the weather bar 340 individually.

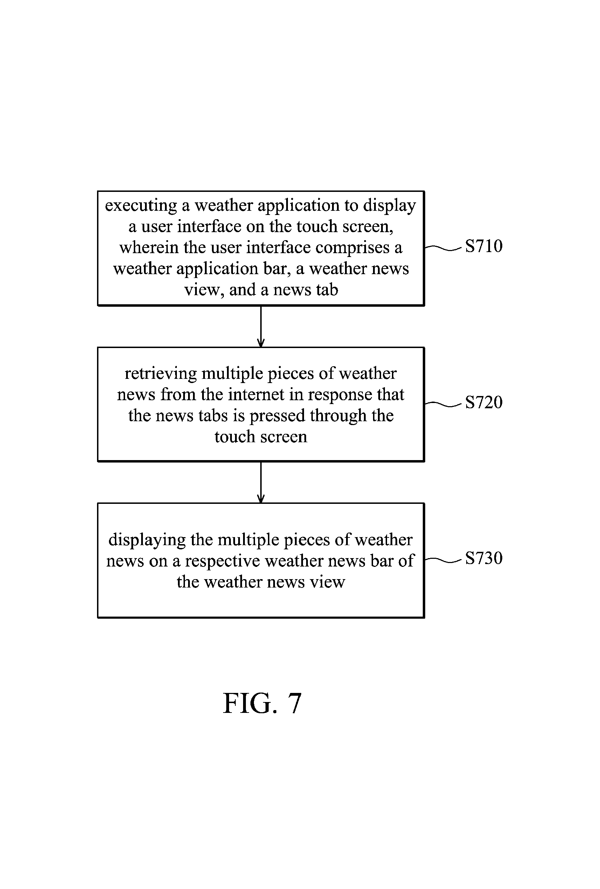

FIG. 7 is a flow chart illustrating a method for displaying a user interface of weather information on the portable electronic device 100 according to an embodiment of the invention. Referring to FIGs. 1, 6 and 7, in step S710, the processor 110 executes a weather application to display a user interface 600 on the touch screen, wherein the user interface 600 comprises a weather application bar 620, a weather news view 670, and a news tab 660. In step S720, the processor 110 retrieves multiple of weather news reports from the internet in response to the pressing of the news tabs 660 through the touch screen 140. In step S730, the processor 110 displays the multiple weather news reports on a respective weather news bar (e.g. weather news bar 671∼673) of the weather news view.

The methods, or certain aspects or portions thereof, may take the form of a program code embodied in tangible media, such as floppy diskettes, CD-ROMs, hard drives, or any other machine-readable (e.g., computer-readable) storage medium, or computer program products without limitation in external shape or form thereof, wherein, when the program code is loaded into and executed by a machine, such as a computer, the machine thereby becomes an apparatus for practicing the methods. The methods may also be embodied in the form of a program code transmitted over some transmission medium, such as an electrical wire or a cable, or through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A computer-implemented method for displaying a dual time zone view on a portable electronic device, comprising
executing a calendar application to display a calendar view including multiple calendar items scheduled in a first time zone and a second time zone; and
displaying a time zone bar including a first column and a second column, wherein the time of the first time zone and the second time zone is displayed on the first column and the second column, respectively.

2. The computer-implemented method as claimed in claim 1, wherein the first time zone corresponds to a current location of a user, and the second time zone corresponds to a destination location of the user.

3. The computer-implemented method as claimed in claim 1, wherein the calendar items further comprise a join session which will be held at a first place in the first time zone and a second place in the second time zone, simultaneously.

4. The computer-implemented method as claimed in claim 1, further comprising:
displaying a pop-up dialogue after executing the calendar application, and the pop-up dialogue comprises information about time and a time zone setting of a nearest event in the calendar items and a remaining time to the nearest event.

5. The computer-implemented method as claimed in claim 4, where the time zone setting of the nearest event can be alternated between the first time zone and the second time zone by a user.

6. The computer-implemented method as claimed in claim 4, wherein the nearest event in the calendar items is highlighted, shaded, or filled with different colors in response to the remaining time of the upcoming event.

7. A portable electronic device, comprising:
a processor configured to execute a calendar application to display a calendar bar including multiple calendar items scheduled in a first time zone and a second time zone, wherein the processor further displays a time zone bar including a first column and a second column, and the time of the first time zone and the second time zone is displayed on the first column and the second column, respectively.
wherein the first time zone corresponds to a current location of a user, and the second time zone corresponds to a destination location of the user.

8. The portable electronic device as claimed in claim 7, wherein the calendar items further comprise a join session which will be held at a first place in the first time zone and a second place in the second time zone, simultaneously.

9. The portable electronic device as claimed in claim 7, wherein the processor further displays a pop-up dialogue after executing the calendar application, and the pop-up dialogue comprises information about time and a time zone setting of a nearest event in the calendar items and a remaining time to the nearest event.

10. The portable electronic device as claimed in claim 9, further comprising:
alternating the time zone setting of the nearest event between the first time zone and the second time zone by a user.

11. The portable electronic device as claimed in claim 9, further comprising:
highlighting, shading, or filling the nearest event in the calendar items with different colors in response to the remaining time of the upcoming event.

12. A computer-implemented method for displaying a user interface of weather information on a portable electronic device with a touch screen, comprising:
executing a weather application to display a user interface on the touch screen, wherein
the user interface comprises a weather application bar, a weather news view, and a news tab;
retrieving multiple weather news reports from the internet in response to the news tabs being pressed through the touch screen; and
displaying the multiple weather news reports on a respective weather news bar of the weather news view.

13. The computer-implemented method as claimed in claim 12, further comprising:
periodically retrieving the latest weather news from the internet; and
updating information in each weather news bar.

14. The computer-implemented method as claimed in claim 12, wherein the retrieved weather news reports are based on the location setting of the weather application bar.

15. A portable electronic device, comprising:
a touch screen; and
a processor configured to execute a weather application to display a user interface on the touch screen, wherein the user interface comprises a weather application bar, a weather news view, and a news tab,
wherein the processor further retrieves multiple weather news reports from the internet in response to the news tabs being pressed through the touch screen and
displays the multiple weather news reports on a respective weather news bar of the weather news view.

16. The portable electronic device as claimed in claim 15, wherein the processor further periodically retrieves the latest weather news from the internet and updates information in each weather news bar.

17. The portable electronic device as claimed in claim 15, wherein the retrieved weather news reports are based on the location setting of the weather application bar.

18. A computer program product, comprising programmable set of instructions configured to perform the steps of the method of any preceding claim 1-6 or 12-14.
